# EUROPEAN PATENT APPLICATION

(11) **EP 4 760 808 A1**
(43) Date of publication of application: **17.06.2026**
(21) Application number: 24896462.9
(22) Date of filing: 25.11.2024
(51) Int. Cl.: H01M 4/36, H01M 4/485, H01M 4/583, H01M 4/38

(54) **SILICON NEGATIVE ELECTRODE MATERIAL, PREPARATION METHOD THEREFOR, AND USE THEREOF**

(30) Priority: 30.11.2023 CN 202311627886
(71) Applicant: REPT BATTERO Energy Co., Ltd., Wenzhou, Zhejiang 325000 (CN); Shanghai Ruipu Energy Co., Ltd., Shanghai 201206 (CN)
(72) Inventor: CAO, Hui, Wenzhou, Zhejiang 325000 (CN); SUN, Yuwei, Wenzhou, Zhejiang 325000 (CN); HOU, Min, Shanghai 201206 (CN); ZHENG, Yinkun, Wenzhou, Zhejiang 325000 (CN); LI, Zhuojie, Wenzhou, Zhejiang 325000 (CN); LIU, Chan, Shanghai 201206 (CN)
(74) Representative: Vitina, Maruta
(86) International application number: PCT/CN2024/134134
(87) International publication number: WO 2025/113373

(57) **Abstract**

A silicon anode material and its preparation method and application, belonging to the field of secondary battery technology. The silicon anode material includes porous γ-lithium aluminate and a carbon coating layer. The pores of the porous γ-lithium aluminate are sequentially deposited with a carbon layer and a silicon material layer. The carbon coating layer coats the surface of the porous γ-lithium aluminate, which has been deposited with the carbon layer and the silicon material layer. The silicon anode material effectively prevents direct contact between the silicon material and the electrolyte, and inhibits the volume expansion of silicon during cycling from the material side. It effectively alleviates volume changes, making the structure of the electrode material more stable, thereby enhancing the electrochemical performance of the material.

## Description

### TECHNICAL FIELD

The present invention belongs to the field of secondary battery technology, and specifically involves a silicon anode material and its preparation method and application.

### BACKGROUND TECHNOLOGY

Secondary batteries, due to their high energy density and long cycle life, have been widely applied in portable electronic devices and electric vehicles. Silicon materials, with their high theoretical capacity and abundant resource reserves, have attracted significant attention and are considered one of the ideal candidates for developing next-generation secondary battery anode materials with high specific energy and high power density. However, silicon materials have low electrical conductivity and significant volume expansion during lithium insertion and extraction cycles, which limits their application as anodes in secondary batteries.

Patent CN111525108A discloses a method for synthesizing carbon coated silicon anode materials, which enhances the conductivity of the material and suppresses the volume expansion effect during the lithium insertion and extraction process of silicon-based materials through carbon coating. However, current single carbon coating is not effective in suppressing volume expansion and cannot effectively prevent electrolyte erosion of silicon materials, thus failing to significantly improve battery performance.

Therefore, how to effectively solve the problem of volume expansion of silicon anode material, avoid the erosion of electrolyte on silicon, and improve the electrochemical performance of anode material is an urgent technical problem to be solved.

### SUMMARY OF THE PRESENT INVENTION

The purpose of the present invention is to overcome the problems existing in the above-mentioned prior art, and to provide a silicon anode material and its preparation method and application.

The present invention is realized by the following technical solution:
The present invention provides a silicon anode material, which comprises porous γ-lithium aluminate and a carbon coating layer. The pores of the porous γ-lithium aluminate are sequentially deposited with a carbon layer and a silicon material layer. The carbon coating layer coats the surface of the porous γ-lithium aluminate where the carbon layer and the silicon material layer have been deposited.

In the present invention, the silicon anode material uses ordered porous γ-lithium aluminate as the base. Carbon layers and silicon material layers are sequentially deposited into the pores of the porous γ-lithium aluminate. First, the carbon layer is deposited to enhance the conductivity of the silicon anode material. Then, the silicon material is deposited in the pores of the porous γ-lithium aluminate, effectively alleviating the volume expansion of the silicon material and reducing the release of stress. The porous γ-lithium aluminate pores can guide the ordered deposition of the silicon material, ensuring the integrity and uniformity of the carbon coating. Compared to other porous materials, porous γ-lithium aluminate has higher ionic conductivity and mechanical strength, effectively enhancing ion conduction and maintaining the material structure. The present invention achieves effective modification of nanoscale silicon materials, preventing direct contact with the electrolyte and avoiding side reactions; it also inhibits the volume expansion of silicon during cycling from the material side, effectively mitigating volume changes and making the electrode material structure more stable, thereby improving the electrochemical performance of the material.

As a preferred embodiment of the silicon anode material of the present invention, the silicon material includes monatomic silicon. In some embodiments, the silicon material layer includes monatomic silicon.

As a preferred embodiment of the silicon anode material of the present invention, the particle size Dv50 of monatomic silicon is 1nm to 300nm, preferably 1nm to 100nm, 1nm to 80nm, 1nm to 70nm, 1nm to 60nm, 1nm to 50nm, 1nm to 40nm, 1nm to 30nm, 1nm to 20nm, 1nm to 10nm, and 1nm to 6nm. In this document, the particle size Dv50 of monatomic silicon can be directionally controlled using conventional CVD deposition methods in the field.

Preferably, the silicon material layer accounts for 30%-50% of the mass of the silicon anode material.

As a preferred embodiment of the silicon anode material according to the present invention, the pore size of the porous γ-lithium aluminate is 1nm-500nm.

When the pore size of porous γ-lithium aluminate is within the above range, it can be applied to the common silicon material particle size on the market at present, so that the silicon anode material has good electrical conductivity.

Preferably, the carbon sources for the carbon coating layer and the deposited carbon layer independently include at least one of alkanes, alkenes, and alkynes. In some embodiments, the alkane is methane.

Preferably, the deposition thickness of the carbon layer is 3nm-4nm.

In the present invention, the thickness of the carbon coating layer is not limited, and can be adjusted according to actual needs, such as the desired capacity value or other electrochemical performance requirements.

Another object of the present invention is to provide a preparation method of the silicon anode material, including the following steps:
(1) Mix the lithium salt solution, organic aluminum solution and complexing agent evenly, stir and evaporate to obtain the gel;
(2) The gel obtained in step (1) is freeze-dried, carbon layer deposition is carried out, silicon material deposition is carried out, calcination is carried out, and carbon coating is carried out to obtain the silicon anode material.

The present invention prepares porous γ-lithium aluminate using sol-gel and freeze-drying methods. Freeze-drying can directly sublimate the solvent, forming a porous structure. The porous γ-lithium aluminate prepared by this method has a honeycomb-like structure, with virtually no obvious flat block structures. This allows for subsequent deposition of carbon layers and silicon materials within the pores, enhancing the electrochemical performance of the silicon anode material.

As a preferred embodiment of the preparation method of the silicon anode material according to the present invention, in step (1), the complexing agent includes at least one of urea, citrate and hydrazine.

The complexing agent has the function of forming complex agglomerates, which is convenient for the sublimation of solvent in the agglomerates during freeze-drying and the formation of porous structure. The above complexing agents all have good complexing effect, among which urea is cheaper in price, so urea is preferred from the economic point of view.

As a preferred embodiment of the preparation method of the silicon anode material according to the present invention, in step (1), the temperature of stirring and evaporation is 40°C-100°C, preferably 50°C-90°C, 60°C-80°C.

As a preferred embodiment of the preparation method of the silicon anode material according to the present invention, in step (2), the rate of freeze-drying is 2°C/min-10°C/min.

The rate of freeze-drying determines the rate of solvent sublimation. The pore size of the γ-lithium aluminate can be adjusted by the freeze-drying rate. If the rate is too high, the formed pores will be too large, which may cause overlapping deposition of silicon materials, affecting electrochemical performance and the suppression of volume expansion. If the rate is too low, the formed pores will be too small, which may result in insufficient deposition of silicon materials, failing to achieve the capacity target and volume buffering effect. When the freeze-drying rate is between 2°C/min and 10°C/min, porous γ-lithium aluminate with optimal pore sizes can be obtained.

Preferably, in step (2), the rate of freeze-drying is 3°C/min-7°C/min.

More preferably, when the rate of freeze-drying is 3°C/min-7°C/min, a porous γ phase with more appropriate pore size and distribution can be obtained.

Preferably, the concentration of lithium salt in the lithium salt solution is 1.5mol/L-1.7mol/L; the concentration of organic aluminum in the organic aluminum solution is 0.3mol/L-0.5mol/L; the amount of complexing agent added is 10%-11% of the total mass of lithium salt and organic aluminum.

Preferably, the solvent of the lithium salt solution includes ethanol and water. Preferably, the solvent of the lithium salt solution includes anhydrous ethanol and deionized water. Preferably, the solvent of the organic aluminum solution includes ethanol. Preferably, the solvent of the organic aluminum solution includes anhydrous ethanol. Preferably, in the solvent of the lithium salt solution, the volume ratio of ethanol to water is (1-5):1, more preferably (1-3):1.

Preferably, the lithium salt is lithium acetate and the organic aluminum is aluminum isopropanol.

As a preferred embodiment of the preparation method of the silicon anode material according to the present invention, in step (2), the calcination temperature is 300°C-1000°C and the duration is 1h-3h.

Preferably, in step (2), the calcination temperature is 700°C-900°C.

In the present invention, the calcination temperature affects the formation of γ-lithium aluminate. If the calcination temperature is too low, it will produce impurity phases of lithium aluminate. Conversely, if the temperature is too high, it will lead to increased loss of lithium salts and the formation of multiple impurity phases. A calcination temperature of 700°C-900°C is more suitable for preparing porous γ-lithium aluminate.

Preferably, in step (2), the method for depositing carbon layers, silicon materials, and carbon coating is CVD. The initial carbon layer deposition is used to form a substrate within the pores of porous γ-lithium aluminate. Then, silicon material deposition follows, which can completely fill the porous structure inside the porous γ-lithium aluminate. After removing the silicon material outside the pores, the silicon material is fully encapsulated by carbon coating.

Another object of the present invention is to provide a secondary battery, including the silicon anode material or the silicon anode material prepared by the preparation method of the silicon anode material.

The secondary battery using the silicon anode material of the present invention has higher rate performance and cycle performance.

The present invention has the following beneficial effects: The silicon anode material of the present invention uses porous γ-lithium aluminate as the base. Carbon layer deposition can improve the conductivity of the silicon anode material. Porous γ-lithium aluminate can effectively alleviate the volume expansion of silicon materials within the pores, reduce the release of stress, and has higher ionic conductivity and mechanical strength. This can effectively enhance ion conduction and maintain the structure of the material. The silicon anode material of the present invention can effectively prevent direct contact between silicon materials and the electrolyte, and suppress the volume expansion of silicon during cycling, thereby mitigating volume changes and stabilizing the electrode material's structure, which enhances the electrochemical performance of the material.

### ILLUSTRATIVE DRAWINGS

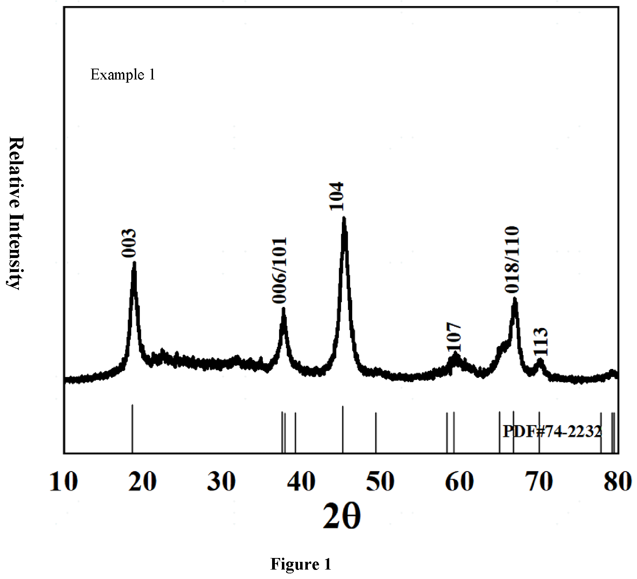

Figure 1 is the XRD diffraction pattern of the porous γ-lithium aluminate prepared in step (1) of Example 1.

### DETAILED DESCRIPTION

To better illustrate the objectives, technical solutions, and advantages of the present invention, the following will provide further explanation with reference to specific embodiments. Those skilled in the art should understand that the specific embodiments described herein are only intended to illustrate the present invention and are not intended to limit it.

The test methods used in the embodiments are conventional methods unless otherwise specified; the materials, reagents, etc., used are commercially available unless otherwise specified.

The particle size Dv50 of monatomic silicon and the pore size of porous γ -lithium aluminate were tested by scanning electron microscope (SEM).

The deposition thickness of the carbon layer was measured by transmission electron microscope (TEM).

The mass fraction of the silicon material layer in the silicon anode material was measured by thermogravimetric analysis (TGA).

### Example 1

A method for preparing a silicon anode material, comprising the following steps:
(1) Take 20mL anhydrous ethanol and 10mL deionized water into a beaker, stir and mix evenly, add 3.30g lithium acetate while stirring, continue to stir until completely dissolved, to get a colorless and transparent lithium salt solution;
   Take 100mL of anhydrous ethanol and pour it into another beaker. Add 10.12g aluminum isopropanol powder while stirring to make aluminum isopropanol evenly dispersed in ethanol to obtain a colorless and transparent aluminum isopropanol solution;
   Add lithium salt solution to aluminum isopropanol solution, add 1.35g complexing agent urea, stir continuously for 1h, and then transfer the mixed solution to 60°C water bath pot to stir and evaporate to obtain gel;
(2) Freeze-dry the gel obtained from step (1) at a rate of 5°C/min; after drying, deposit a carbon layer using CVD, followed by monatomic silicon deposition. Calcine at 900°C for 2h, then use CVD to carbon-coat the calcined material to obtain the silicon anode material; in this process, both the carbon layer material and the carbon coated layer material use methane as the carbon source.

In this embodiment, the particle size Dv50 of monatomic silicon in the silicon anode material is 6nm; the pore size of porous γ-lithium aluminate is 80nm-120nm; the deposition thickness of carbon layer is 3nm-4nm; the silicon material layer accounts for 43% of the mass of the silicon anode material.

After calcining the gel obtained in step (1) at 900°C for 2h, XRD spectrum was tested, as shown in Figure 1. It can be found that the characteristic diffraction peaks of (003), (104) and (110) of the sample are relatively obvious, and they are consistent with the standard card. The peak type is sharp and the intensity is high, indicating good crystallinity.

### Example 2

The main difference between the preparation method of the silicon anode material of this embodiment and that of Example 1 is that in step (2), the calcination temperature is 800°C, and the other preparation methods and parameters are consistent with those of Example 1 to obtain the silicon anode material of this embodiment.

In this embodiment, the particle size Dv50 of monatomic silicon in the silicon anode material is 6nm; the pore size of porous γ-lithium aluminate is 80nm-120nm; the deposition thickness of carbon layer is 3nm-4nm; and the silicon material layer accounts for 43% of the mass of the silicon anode material.

### Example 3

The main difference between the preparation method of the silicon anode material in this embodiment and that in Example 1 is that, in step (2), the calcination temperature is 700°C, and the other preparation methods and parameters are consistent with those in Example 1, so as to obtain the silicon anode material in this embodiment.

In this embodiment, the particle size Dv50 of monatomic silicon in the silicon anode material is 6nm; the pore size of porous γ-lithium aluminate is 80nm-120nm; the deposition thickness of carbon layer is 3nm-4nm; and the silicon material layer accounts for 43% of the mass of the silicon anode material.

### Example 4

The main difference between the preparation method of the silicon anode material in this embodiment and that in Example 1 is that the calcination time in step (2) is 1h, and the other preparation methods and parameters are consistent with those in Example 1 to obtain the silicon anode material in this embodiment.

In this embodiment, the particle size Dv50 of monatomic silicon in the silicon anode material is 6nm; the pore size of porous γ-lithium aluminate is 80nm-120nm; the deposition thickness of carbon layer is 3nm-4nm; the silicon material layer accounts for 43% of the mass of the silicon anode material.

### Example 5

The main difference between the preparation method of the silicon anode material in this embodiment and that in Example 1 is that, in step (2), the rate of freeze-drying is 3°C/min, and the other preparation methods and parameters are consistent with those in Example 1, so as to obtain the silicon anode material in this embodiment.

In this embodiment, the particle size Dv50 of monatomic silicon in the silicon anode material is 6nm; the pore size of porous γ-lithium aluminate is 40nm-90nm; the deposition thickness of carbon layer is 3nm-4nm; the silicon material layer accounts for 43% of the mass of the silicon anode material.

### Example 6

The main difference between the preparation method of the silicon anode material in this embodiment and that in Example 1 is that, in step (2), the rate of freeze-drying is 7°C/min, and the other preparation methods and parameters are consistent with those in Example 1, so as to obtain the silicon anode material in this embodiment.

In this embodiment, the particle size Dv50 of monatomic silicon in the silicon anode material is 6nm; the pore size of porous γ-lithium aluminate is 110nm-160nm; the deposition thickness of carbon layer is 3nm-4nm; the silicon material layer accounts for 43% of the mass of the silicon anode material.

### Example 7

The main difference between the preparation method of the silicon anode material in this embodiment and that in Example 1 is that, in step (2), the calcination temperature is 300°C, and the other preparation methods and parameters are consistent with those in Example 1, so as to obtain the silicon anode material in this embodiment.

In this embodiment, the particle size Dv50 of monatomic silicon in the silicon anode material is 6nm; the pore size of porous γ-lithium aluminate is 80nm-120nm; the deposition thickness of carbon layer is 3nm-4nm; the silicon material layer accounts for 43% of the mass of the silicon anode material.

### Example 8

The main difference between the preparation method of the silicon anode material in this embodiment and that in Example 1 is that, in step (2), the calcination temperature is 1000°C, and the other preparation methods and parameters are consistent with those in Example 1, so as to obtain the silicon anode material in this embodiment.

In this embodiment, the particle size Dv50 of monatomic silicon in the silicon anode material is 6nm; the pore size of porous γ-lithium aluminate is 80nm-120nm; the deposition thickness of carbon layer is 3nm-4nm; the silicon material layer accounts for 43% of the mass of the silicon anode material.

### Example 9

The main difference between the preparation method of the silicon anode material in this embodiment and that in Example 1 is that, in step (2), the rate of freeze-drying is 10°C/min, and the other preparation methods and parameters are consistent with those in Example 1 to obtain the silicon anode material in this embodiment.

In this embodiment, the particle size Dv50 of monatomic silicon in the silicon anode material is 6nm; the pore size of porous γ-lithium aluminate is 150nm-190nm; the deposition thickness of carbon layer is 3nm-4nm; and the silicon material layer accounts for 43% of the mass of the silicon anode material.

### Example 10

The main difference between the preparation method of the silicon anode material in this embodiment and that in Example 1 is that, in step (2), the rate of freeze-drying is 2°C/min, and the other preparation methods and parameters are consistent with those in Example 1, so as to obtain the silicon anode material in this embodiment.

In this embodiment, the particle size Dv50 of monatomic silicon in the silicon anode material is 6nm; the pore size of porous γ-lithium aluminate is 35nm-70nm; the deposition thickness of carbon layer is 3nm-4nm; the silicon material layer accounts for 43% of the mass of the silicon anode material.

### Example 11

The main difference between the preparation method of silicon anode material in this embodiment and that in Example 1 is that the deposition conditions of CVD method for deposition of monatomic silicon are changed to obtain the silicon anode material in this embodiment.

In this embodiment, the particle size Dv50 of monatomic silicon in the silicon anode material is 70nm; the pore size of porous γ-lithium aluminate is 80nm-120nm; the deposition thickness of carbon layer is 3nm-4nm; the silicon material layer accounts for 43% of the mass of the silicon anode material.

### Comparative Example 1

A method for preparing a silicon anode material, comprising the following steps:
(1) Take 20mL anhydrous ethanol and 10mL deionized water into a beaker, stir and mix evenly, add 3.30g lithium acetate while stirring, continue to stir until completely dissolved, and get a colorless transparent lithium salt solution;
   Take 100mL of anhydrous ethanol and pour it into another beaker. Add 10.22g aluminum isopropanol powder while stirring to make aluminum isopropanol evenly dispersed in ethanol, resulting in a colorless and transparent aluminum isopropanol solution;
   Add lithium salt solution to aluminum isopropanol solution, add 1.35g complexing agent urea, stir continuously for 1h, and then transfer the mixed solution to 60°C water bath pot for stirring and evaporation to obtain gel;
(2) The gel obtained in step (1) is calcined at 900°C constant temperature for 2h, and then the carbon layer is deposited by CVD method, followed by the deposition of monatomic silicon, and finally the carbon coating of the calcined material is carried out by CVD method to obtain the silicon anode material.

The main difference between this embodiment and Example 1 is that the gel obtained in step (1) is not freeze-dried, and the γ-lithium aluminate obtained does not have a porous structure.

### Comparative Example 2

A method for preparing a silicon anode material includes the following steps: using commercially available porous ceramic material alumina as the substrate, carbon layer deposition is carried out first by CVD method, followed by silicon particle deposition, and calcination treatment at 900°C for 2h, and carbon coating is carried out on the calcined material by CVD method to obtain the silicon anode material.

In this embodiment, the particle size Dv50 of monatomic silicon in the silicon anode material is 6nm; the pore size of porous ceramic material alumina is 80nm-120nm; the deposition thickness of carbon layer is 3nm-4nm; the silicon material layer accounts for 43% of the mass of the silicon anode material.

### Comparative Example 3

The main difference between the preparation method of the comparative silicon anode material and Example 1 is that, in step (2), carbon layer deposition and carbon coating are not carried out, and the other preparation methods and parameters are consistent with Example 1 to obtain the comparative silicon anode material.

The particle size Dv50 of monatomic silicon in the proportionate silicon anode material is 6nm; the pore size of porous γ-lithium aluminate is 80nm-120nm; the silicon material layer accounts for 43% of the mass of the silicon anode material.

### Battery preparation:

The above embodiments and comparative examples of silicon anode materials are prepared into silicon anode, which are further prepared into secondary batteries.

Specifically, the preparation steps for the silicon anode are as follows: weigh the silicon anode materials, polyacrylic acid (PAA), carbon black (SP), and single-walled carbon nanotubes according to the mass percentages of 0.95:0.4:0.95:0.05 from the above examples and the control group. Mix them and stir in a beaker for half an hour, then coat the surface of copper foil. Dry under vacuum at 60°C for 2h, and cut into circular pieces with a diameter of 14mm.

Specifically, the preparation steps of the secondary battery are as follows: the silicon anode prepared above is used as the working electrode, and the lithium sheet is used as the counter electrode, and the electrolyte is LiPF₆/EC+DMC+DEC (volume ratio 1:1:1), and the button battery is assembled into CR2016 type.

### Electrochemical performance test:

Rate test: current density 0.1A/g~1.6A/g~0.1A/g, voltage range 0.01V~3.0V, rate performance is the ratio of 0.1A/g after 1.6A/g and initial 0.1A/g capacity.
Cycling test: the battery capacity retention rate after 300 cycles at a current density of 0.1A/g and a voltage range of 0.01V~3.0V.

The results of the above electrochemical performance tests are shown in Table 1.

**Table 1: Performance test results of batteries obtained by the examples and the comparative examples**

| | Rate capability | Cycle performance |
|---|---|---|
| Example 1 | 98.4% | 300cycles@98.2% |
| Example 2 | 97.2% | 300cycles@96.4% |
| Example 3 | 96.8% | 300cycles@95.7% |
| Example 4 | 97.9% | 300cycles@96.8% |
| Example 5 | 98.2% | 300cycles@97.1% |
| Example 6 | 97.4% | 300cycles@96.2% |
| Example 7 | 93.7% | 300cycles@94.3% |
| Example 8 | 94.1% | 300cycles@93.3% |
| Example 9 | 93.9% | 300cycles@96.5% |
| Example 10 | 95.3% | 300cycles@88.9% |
| Example 11 | 96.2% | 300cycles@80.3% |
| Comparative Example 1 | 85.7% | 300cycles@74.2% |
| Comparative Example 2 | 86.6% | 300cycles@84.3% |
| Comparative Example 3 | 87.1% | 300cycles@85.6% |

From the data in Table 1, it can be seen that the silicon anode material prepared in the present invention embodiments exhibits significantly improved performance when applied to batteries compared to the Comparative Examples 1-3. The results from Example 1 and the Comparative Example 1 show that due to the non-porous structure of the γ-lithium aluminate in the Comparative Example 1, the deposited silicon particles are exposed and react intensely with the electrolyte, leading to severe degradation of its rate and cycle performance. The results from Example 1 and the Comparative Example 2 indicate that the conventional porous fast ion conductor material has inferior ion transport capability and expansion suppression effect compared to the porous γ-lithium aluminate of the present invention. The results from Example 1 and the Comparative Example 3 show that when no carbon layer is deposited within the pores of the γ-lithium aluminate prepared by the present invention and no carbon coating is applied, it results in reduced conductivity of the silicon anode material, thereby significantly weakening the rate and cycle performance of the prepared secondary battery.

From the data results of Example 1 and Example 7, it is known that an excessively low calcination temperature can produce impurity phases, leading to low synthesis quality of γ-lithium aluminate, which is not conducive to improving the rate and cycle performance. From the data results of Example 1 and Example 8, it is known that an excessively high calcination temperature causes excessive volatilization of lithium salts during synthesis, resulting in multiple impurity phases, which is also detrimental to improving the rate and cycle performance. From the data results of Example 1 and Example 9, it is known that an excessively high drying rate leads to larger pore sizes and poorer uniformity, increasing the resistance of ion transport and reducing the rate performance. From the data results of Example 1 and Example 10, it is known that a too low drying rate increases process time, results in smaller pore sizes, and is not conducive to particle deposition, potentially exposing particles externally, leading to a decline in cycle performance.

From the data results of Example 1 and Example 11, it can be seen that when the particle size Dv50 of monatomic silicon is large, the rate performance and cycle performance are decreased. However, the rate performance of the battery prepared by the silicon anode material of Example 11 is still much higher than that of the battery of Comparative Examples 1-3.

In summary, the silicon anode material of the present invention can effectively enhance the electrochemical performance of batteries. When the battery uses the silicon anode material provided by the present invention, during the 0.01~3.0V voltage range, when the current density is increased from 0.1A/g~1.6A/g~0.1A/g for charge-discharge testing, the ratio of the capacity at 0.1A/g after 1.6A/g to the initial 0.1A/g can reach 98.4%; Under 0.1A/g, the capacity retention rate after 300 cycles can reach 98.2%.

Finally, it should be noted that the above embodiments are intended to illustrate the technical solution of the present invention and not to limit the scope of protection of the present invention. Although the present invention has detailed description with reference to preferred embodiments, those skilled in the art should understand that modifications or equivalent substitutions can be made to the technical solution of the present invention without departing from its essence and scope.

## Claims

1. A silicon anode material, **characterized in that** the silicon anode material comprises porous γ-lithium aluminate and a carbon coating layer, wherein the pores of the porous γ-lithium aluminate are sequentially deposited with a carbon layer and a silicon material layer, and the carbon coating layer coats the surface of the porous γ-lithium aluminate where the carbon layer and the silicon material layer have been deposited.

2. The silicon anode material according to claim 1, **characterized in that** the silicon material layer comprises monatomic silicon.

3. The silicon anode material according to claim 2, **characterized in that** the particle size Dv50 of the monatomic silicon is 1nm-300nm.

4. The silicon anode material according to claim 1, **characterized in that** the pore size of the porous γ-lithium aluminate is 1nm-500nm.

5. The silicon anode material according to claim 1, **characterized in that** the carbon sources for the carbon coating layer and the deposited carbon layer independently include at least one of alkanes, alkenes and alkynes.

6. A method for preparing a silicon anode material according to any one of claims 1 to 5, **characterized in that** it comprises the following steps:
(1) Mix the lithium salt solution, organic aluminum solution and complexing agent evenly, stir and evaporate to obtain the gel;
(2) The gel obtained in step (1) is freeze-dried, carbon layer deposition is carried out, silicon material deposition is carried out, calcination is carried out, and carbon coating is carried out to obtain the silicon anode material.

7. The method for preparing the silicon anode material according to claim 6, **characterized in that** the complexing agent in step (1) includes at least one of urea, citrate and hydrazine.

8. The method for preparing the silicon anode material according to claim 6, **characterized in that** the freeze-drying rate in step (2) is 2°C/min-10°C/min.

9. The method for preparing silicon anode material according to claim 6, **characterized in that** in step (2), the calcination temperature is 300°C-1000°C and the duration is 1h-3h.

10. A secondary battery, **characterized in that** it comprises the silicon anode material as claimed in any one of claims 1 to 5 or the silicon anode material prepared by the method as claimed in any one of claims 6 to 9.
